# EUROPEAN PATENT APPLICATION

(11) **EP 4 581 919 A2**
(43) Date of publication of application: **09.07.2025**
(21) Application number: 24222997.9
(22) Date of filing: 23.12.2024
(51) Int. Cl.: A01C 7/10, A01C 7/20, A01C 21/00

(54) **METHOD OF EVALUATION OF AN AGRICULTURAL FURROW**

(30) Priority: 08.01.2024 US 202463618607 P; 18.12.2024 US 202418985738
(71) Applicant: Deere & Company, Moline, IL 61265 (US)
(72) Inventor: HERMAN, Carolyn R, Waterloo, 50613 (US); MAUER, Jason C, Urbandale, 50131 (US)
(74) Representative: Reddie & Grose LLP

(57) **Abstract**

A method for evaluating provided data accuracy for an agricultural machine (14). The method includes obtaining image data of the furrow (202) from a camera (62) on the agricultural machine (14), determining from the image data an average planting depth within the furrow (202), and adjusting, on a user interface, a planting depth offset based on the average planting depth.

## Description

### Cross-Reference to Related Patent Application

This application claims the benefit and priority under 35 U.S.C. § 119(e) to U.S. Provisional Application No. 63/618,607, titled "AGRICULTURAL SEED FURROW," filed January 8, 2024, the disclosure of which is incorporated by reference herein in its entirety.

### Field of the Disclosure

The present disclosure relates to an apparatus, method and system for evaluating a furrow formed by an agricultural machine.

### Background of the Disclosure

Farmers, like others, seek to increase their productivity. Planter row units are commonly used by farmers to plant seed and/or a corresponding commodity in the ground. Planter row units often include various ground-engaging tools that assist in the commodity or seed deposition process by, for example, opening furrows to form trenches, placing or depositing commodity and seed in the trenches, packing the soil, and closing the furrows or trenches over the newly-deposited commodity and seed. From the operator station, it is difficult to assess several essential factors which govern seed planting quality. These factors include but are not limited to a seed's final resting place, spacing between planted seeds, depths of the planted seeds, furrow integrity, which may be represented by a desirable furrow shape and structure, and seed to soil contact, which may be represented by seedbed quality metrics indicating soil content materials.

Further contributions in this area of technology are needed to increase efficiency, increase productivity, and increase seed planting quality by planter row units during operation. One option to increase efficiency, increase productivity, and increase the quality of trench formation and commodity placement by planter row units is to add one or more cameras to the planter row unit to monitor and detect seed planting quality such that a user from the operator station of tractor or elsewhere can see the seed furrow and/or a visual representation of the seed furrow including information relating to commodity depth, and furrow quality. The discussion above is merely provided for general background information and is not intended to be used as an aid in determining the scope of the claimed subject matter.

### Summary

One implementation is a method for evaluating a furrow formed by an agricultural machine, including: obtaining image data of the furrow from a camera on the agricultural machine; determining from the image data an average planting depth within the furrow; and adjusting, on a user interface, a planting depth offset based on the average planting depth.

In one example of this implementation, the image data comprises images that cannot be evaluated to determine at least one of the depth of the furrow, a furrow profile and a camera quality.

In yet another example, the planting depth offset is displayed visually on a user interface. In part of this example, the user interface displays a slider configured to change the planting depth offset. In part of this example, the user interface provides adjustments for a shallower planting depth or a deeper planting depth, in which the shallower planting depth and deeper planting depth to a selection of the planting depth offset. In another part of this example, a decrease in value of the planting depth offset corresponds to a deeper planting depth and in an increase in value of the planting depth offset corresponds to a shallower planting depth.

In yet another example of this implementation, the feedback is considered by an automated system. In part of this example, the automated system is a downforce automation system. In a different part of this example, the automated system is a row cleaner automation system. In yet another part of this example, the automated system is a depth control automation system.

Another implementation of this disclosure is a method for evaluating quality of provided values for an agricultural machine. The method includes obtaining a plurality of values for a time interval, processing the plurality of values by comparing each of the plurality of values to one or more other of the plurality of values, identifying the number of outliers in the plurality of values for the time interval, generating a value confidence for the time interval by comparing the number of outliers with the total number of plurality of values for the time interval, and providing feedback indicating the value confidence.

In one example of this implementation, each of the plurality of values comprise at least one of an average planting depth or a planting depth offset. In part of this example, the average planting depth value is determined from image data provided by a camera.

In another example of this implementation, the feedback is displayed visually on a user interface. In part of this example, the user interface displays a bar configured to change in size to correspond with the value confidence.

In another example of this implementation, the feedback is considered by an automated system. In one part of this example, the automated system is a downforce automation system. In another part, the automated system is a row cleaner automation system. In yet another part of this example, the automated system is a depth control automation system.

In a further implementation there is provided a method for evaluating a furrow formed by an agricultural machine including: obtaining image data of the furrow from a camera on the agricultural machine; determining from the image data an average planting depth within the furrow; and adjusting, on a user interface, a planting depth offset based on the average planting depth.

In some implementations the method includes wherein the image data comprise images that cannot be evaluated to determine at least one of the furrow depth, the average planting depth, a furrow profile and a camera quality.

In some implementations the method includes wherein the planting depth offset is displayed visually on a user interface.

In some implementations the method includes wherein the user interface displays a slider configured to change with the planting depth offset.

In some implementations the method includes wherein the user interface provides adjustments for a shallower planting depth and a deeper planting depth, the shallower and deeper planting depth corresponding to the planting depth offset.

In some implementations the method includes wherein a decrease in value of the planting corresponds to a shallower planting depth and in an increase in value of the planting depth corresponds to a deeper planting depth.

In some implementations the method includes wherein the feedback is considered by an automated system.

In some implementations the method includes wherein the automated system is a downforce automation system.

In some implementations the method includes wherein the automated system is a row cleaner automation system.

In some implementations the method includes wherein the automated system is a depth control automation system.

In an additional implementations there is provide a method for evaluating quality of provided values for an agricultural machine. The method includes: obtaining a plurality of planting depth values for a time interval; processing the plurality of planting depth values by comparing each of the plurality of planting depth values to one or more other of the plurality of planting depth values; identifying a number of outliers in the plurality of planting depth values for the time interval; generating a value confidence for the time interval by comparing the number of outliers with the total number of the plurality of planting depth values for the time interval; and providing feedback indicating the value confidence.

In some implementations the method includes wherein each of the plurality of planting depth values comprise at least one of an average planting depth or a planting depth offset.

In some implementations the method includes wherein the average planting depth is determined from image data provided by a camera.

In some implementations the method includes wherein the feedback is displayed visually on a user interface.

In some implementations the method includes wherein the user interface displays a bar configured to change in appearance to correspond with the value confidence.

In some implementations the method includes wherein the user interface displays an icon or indicator to correspond with conditions of low camera confidence, low furrow integrity, cleanliness, dust, or other environmental condition.

In some implementations the method includes wherein the feedback is considered by an automated system.

In some implementations the method includes wherein the automated system is a downforce automation system.

In some implementations the method includes wherein the automated system is a row cleaner automation system.

In some implementations the method includes wherein the automated system is a depth control automation system.

### Brief Description of the Drawings

The above-mentioned aspects of the present disclosure and the manner of obtaining them will become more apparent and the disclosure itself will be better understood by reference to the following description of the implementations of the disclosure, taken in conjunction with the accompanying drawings, wherein:
Fig. 1 is a side view of one implementation of a planter row unit;
Fig. 2 is a schematic representation of an open furrow with a seed positioned therein by a planter row unit;
Fig. 3 is a schematic representation of components of an agricultural work machine;
Fig. 4 is a schematic representation of a logic flow for providing a camera confidence; and
Fig. 5 is a schematic representation of a logic flow for providing a furrow depth consistency;
Fig. 6a is a front view of the display screen or portion thereof with graphical interface showing information related to commodity depth offset;
Fig. 6b is a front view of the display screen or portion thereof with graphical interface showing another example of information related to commodity depth offset;
Fig. 6c is a cutaway view of the display screen or portion of FIG. 6b with graphical interface showing information related to commodity depth offset;
Fig. 6d is a cutaway view of the display screen or portion of FIG. 6b with graphical interface showing information related to commodity depth offset;
Fig. 7 is a cutaway view of the display screen or portion of FIG. 6a with graphical interface showing information related to commodity depth;
Fig. 8 is a cutaway view of the display screen or portion of FIG. 6a with graphical interface showing information related to commodity depth;
Fig. 9 is a cutaway view of the display screen or portion of FIG. 6c with graphical interface showing information related to commodity depth;
Fig. 10 is a schematic representation of a logic flow for providing information related to furrow quality;
Fig. 11 is a schematic representation of a logic flow for providing information related to the camera;
Fig. 12 is a front view of the display screen or portion thereof with graphical interface showing another example of information related to furrow quality and the camera;
Fig. 13a is a cutaway view of the display screen or portion of FIG. 12 with graphical interface showing information related to the furrow quality;
Fig. 13b is a cutaway view of the display screen or portion of FIG. 12 with graphical interface showing information related to the furrow quality;
Fig. 14a is a cutaway view of the display screen or portion of FIG. 12 with graphical interface showing information related to the camera; and
Fig. 14b is cutaway view of another example of the display screen or portion of FIG. 12 with graphical interface showing information related to the camera.

Corresponding reference numerals are used to indicate corresponding parts throughout the several views.

### Detailed Description

The implementations of the present disclosure described below are not intended to be exhaustive or to limit the disclosure to the precise forms in the following detailed description. Rather, the implementations are chosen and described so that others skilled in the art may appreciate and understand the principles and practices of the present disclosure.

The present disclosure utilizes a camera attached to the planter row unit to provide image data to a computing device to be further analyzed to determine characteristics of the trench and any commodity therein among other things and display the determined characteristics to a user. Among other things, the image data provided by the camera may be analyzed to determine one or more of a profile of the seed trench walls, the depth of the seed trench, and the 3D location of artifacts or seed within the seed trench among other things. See U.S. Application Nos. 17/900,612 and 16/918,293 and International Application No. PCT/US23/12451 for examples of agricultural machines that utilize camera data, the detailed descriptions and figures of which being hereby incorporated herein by reference.

Often, the camera data from many subsequent images are analyzed to identify characteristics of the trench or commodity distributed therein. For example, a camera may capture about forty frames per second as the agricultural machine travels along an underlying surface. The agricultural machine may travel along the underlying surface at about five miles per hour during a planting operation. In this example, for a ten second interval the agricultural (or work) machine may have planted commodity for about seventy-three linear feet and the camera may have captured about four-hundred frames of data. Each of the four-hundred frames of data from this example may be analyzed to determine features of the trench and commodity such as commodity spacing, fertilizer and seed placement, trench quality, and trench depth among other things. For systems that rely on the captured camera data, it is important for the user and other systems of the work machine to understand the camera data (e.g., the data is displayed in an intuitive manner) and have confidence that the data may be relied upon. Accordingly, one aspect of this disclosure provides a method for providing camera data to the user of the agricultural machine and, optionally, feedback regarding the confidence for which the provided image data can be analyzed. In other words, if 100% of the images can be analyzed to provide the required information, the confidence may be about 100. However, if only 50% of the image can be analyzed over a given timeframe (i.e., due to obstructions to the camera such as dust, camera image quality errors, or other hardware or environmental inputs that affect the image quality provided by the camera), the provided confidence may only be 50.

The specific examples given herein regarding camera capture rate, speed of the work machine, and confidence numbers are only one example of the implementations considered as part of this disclosure. Accordingly, the teachings of this disclosure may be applied to cameras that capture images at greater than forty frames per second. Similarly, this disclosure also contemplates applying the teachings discussed herein to systems have a camera that captures images at less than forty images per second. Similarly, the teachings of this disclosure can be applied to any speed of the work machine and the specific confidence numbers can be tailored to any specific application.

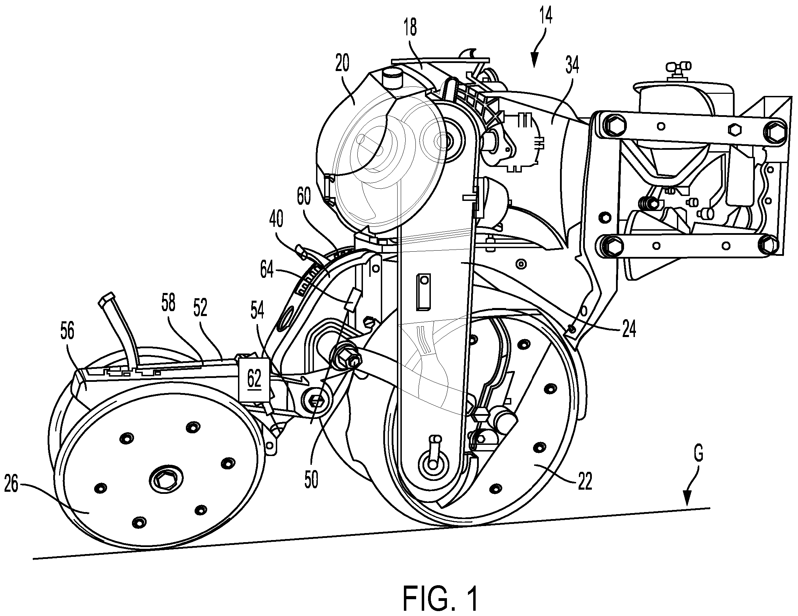

Referring now to Fig. 1 of the present disclosure, one exemplary implementation of a planter row unit 14 connected to an agricultural work machine (not illustrated) such as a planter or seeder is shown. The planter row unit 14 is an illustrative implementation wherein other implementations of planter row units can be used with the present disclosure. In Fig. 1, only a single planter row unit 14 is shown, but a plurality of planter row units 14 may be coupled to a frame of the agricultural work machine in any known manner. The planter row unit 14 may be coupled to the frame by a linkage (not illustrated) so that the planter row unit 14 can move up and down to a limited degree relative to the frame.

Each planter row unit 14 may include an auxiliary or secondary hopper 18 for holding product such as fertilizer, seed, chemical, or any other known product or commodity. In this implementation, the secondary hopper 18 may hold seed. As such, a seed meter 20 is shown for metering seed received from the secondary seed hopper 18. One or more furrow openers and gauge wheels 22 may be provided on the planter row unit 14 for forming a furrow or trench in a field for receiving metered seed (or other commodity) from the seed meter 20. The seed or other product may be transferred to the trench from the seed meter 20 by a seed tube 24 or a brushbelt assembly. A closing assembly or closing wheel 26 may be coupled to each planter row unit 14 and is used to close the furrow or trench with the seed or other product contained therein.

In one implementation, the seed meter 20 is a vacuum seed meter, although in alternative implementations other types of seed meters using mechanical assemblies or positive air pressure may also be used for metering seed or other product. In one implementation, a brushbelt assembly distributes the seed into the corresponding furrow or trench. As described above, the present disclosure is not solely limited to dispensing seed. Rather, the principles and teachings of the present disclosure may also be used to apply non-seed products to the field. For seed and non-seed products, the planter row unit 14 may be considered an application unit with a secondary hopper 18 for holding product, a product meter for metering product received from the secondary hopper 18 and an applicator for applying the metered product to a field. For example, a dry chemical fertilizer or pesticide may be directed to the secondary hopper 18 and metered by the product meter 20 and applied to the field by the applicator.

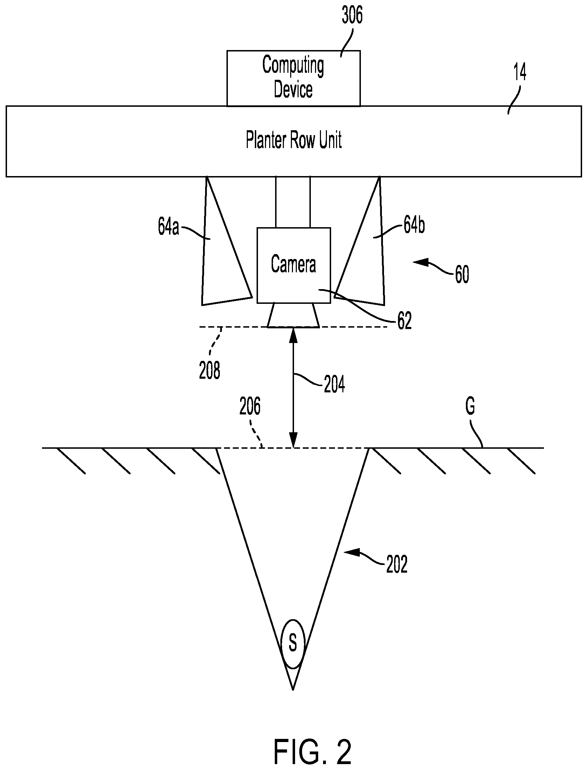

The planter row unit 14 includes a shank 40 that extends away from a body portion 34. The shank 40 is pivotally coupled at pivot 50 to a shank extension 52. The shank extension 52 has a pivot end 54 that is pivotably connected to the pivot 50 and an opposite shank extension end 56 with a shank body portion 58 that spans between the pivot end 54 and the shank extension end 56. The planter row unit 14 includes a pair of disc openers and gauge wheels 22 mounted on the body portion 34 and a pair of closing wheels 26 rotatably mounted on the shank extension 52. The pair of disc openers and gauge wheels 22 form an actual trench or furrow 202 (see Fig. 2) in the underlying surface, for example ground surface G, during operation of the planter row unit 14. Alternatively, other opening devices can be used in place of the pair of disc openers and gauge wheels 22. The pair of closing wheels 26 close or cover the actual trench or furrow 202 with displaced soil that occurs from the pair of disc openers and gauge wheels 22 opening or forming the trench 202 in the ground surface G. Alternatively, other closing devices can be used in place of the pair of closing wheels 26.

A visualization system 60 is operably connected and mounted to the planter row unit 14 as illustrated in Figs. 1 and 2. The visualization system 60 includes a camera 62 and may include one or more light 64a, 64b. The camera 62 is mounted between the pair of closing wheels 26 and the pair of disc openers and gauge wheels 22 or alternatively the camera 62 is mounted between the pair of closing wheels 26 and the seed tube 24. In other implementations, the camera 62 is positioned at any location that provides a visual perspective to the camera 62 of the opened furrow 202. The light 64 is also mounted between the pair of closing wheels 26 and the pair of disc openers gauge wheels 22 or alternatively the light 64 is mounted between the pair of closing wheels 26 and the seed tube 24. In other implementations, the light 64 is positioned at any location that allows the light 64 to illuminate the opened furrow or trench for the camera 62.

In any implementation, the camera 62 is oriented to point down towards the ground surface G at the actual trench 202 that is formed by furrow opening discs and associated gauge wheels 22. As such, the camera 62 and the light 64 can be operated in the visible spectrum range, or outside of the visible spectrum range such as infrared range in order to have better air obscurant penetration such as dust penetration. While the actual trench 202 is formed by the furrow opening discs and gauge wheels 22, soil and dust can fill or permeate the air so it is difficult for the user or a conventional color camera to capture the actual trench 202 cross-sectional shape. A near infrared camera, such as a short wavelength infra-red camera, can be used in one implementation of this disclosure. In another implementation, the camera 62 may provide image data in a visible light spectrum, near-infrared spectrum, or infrared spectrum.

In certain implementations, the visualization system 60 includes or is operatively connected to a computing device 306 such as a controller structured to perform certain operations to control the camera 62 and the light 64. In certain implementations, the camera 62 includes the controller. In certain implementations, the controller forms a portion of a processing subsystem including one or more computing devices having memory, processing, and communication hardware. The controller may be a single device or a distributed device, and the functions of the controller may be performed by hardware or by instructions encoded on computer readable medium. The controller may be included within, partially included within, or completely separated from other controllers (not shown) associated with the work machine and/or the visualization system 60. The controller is in communication with any sensor or other apparatus throughout the visualization system 60, including through direct communication, communication over a datalink, and/or through communication with other controllers or portions of the processing subsystem that provide sensor and/or other information to the controller.

In certain implementations, the computing device 306 is described as functionally executing certain operations. The descriptions herein including the controller operations emphasizes the structural independence of the computing device 306 and illustrates one grouping of operations and responsibilities of the computing device 306. Other groupings that execute similar overall operations are understood within the scope of the present application. Aspects of the computing device 306 may be implemented in hardware and/or by a computer executing instructions stored in non-transient memory on one or more computer readable media, and the computing device 306 may be distributed across various hardware or computer based components.

Example and non-limiting computing device 306 implementation elements include sensors providing any value determined herein, sensors providing any value that is a precursor to a value determined herein, datalink and/or network hardware including communication chips, oscillating crystals, communication links, cables, twisted pair wiring, coaxial wiring, shielded wiring, transmitters, receivers, and/or transceivers, logic circuits, hard-wired logic circuits, reconfigurable logic circuits in a particular non-transient state configured according to the module specification, any actuator including at least an electrical, hydraulic, or pneumatic actuator, a solenoid, an op-amp, analog control elements (springs, filters, integrators, adders, dividers, gain elements), and/or digital control elements.

The listing herein of specific implementation elements is not limiting, and any implementation element for any computing device described herein that would be understood by one of skill in the art is contemplated herein. The computing devices herein, once the operations are described, are capable of numerous hardware and/or computer based implementations, many of the specific implementations of which involve mechanical steps for one of skill in the art having the benefit of the disclosures herein and the understanding of the operations of the computing devices provided by the present disclosure.

One of skill in the art, having the benefit of the disclosures herein, will recognize that the computing devices, controllers, control systems and control methods disclosed herein are structured to perform operations that improve various technologies and provide improvements in various technological fields. Certain operations described herein include operations to interpret one or more parameters. Interpreting, as utilized herein, includes receiving values by any method known in the art, including at least receiving values from a datalink or network communication, receiving an electronic signal (e.g. a voltage, frequency, current, or PWM signal) indicative of the value, receiving a software parameter indicative of the value, reading the value from a memory location on a non-transient computer readable storage medium, receiving the value as a run-time parameter by any means known in the art, and/or by receiving a value by which the interpreted parameter can be calculated, and/or by referencing a default value that is interpreted to be the parameter value.

Referring now specifically to Fig. 2, a schematic section view of one exemplary implementation of components contemplated herein for this disclosure is illustrated. More specifically, a section view looking down the length of the open furrow 202 with a seed S positioned therein is illustrated. From this perspective, the camera 62 is illustrated directed down towards the furrow 202. The camera 62 may be positioned on the row unit 14 such that the camera 62 can capture image data of the furrow 202 while in the opened configuration (i.e., between the disc openers and gauge wheels 22 and closing wheels 26). Lights 64a, 64b may be positioned adjacent to the camera 62 to generally illuminate the open furrow 202 to provide enhanced image data. While the lights 64a, 64b are illustrated on opposing sides of the camera 62 relative to the furrow 202 in Fig. 2, this disclosure contemplates positioning the lights 64a, 64b in front of and behind the camera 62 from the perspective of Fig. 2. Alternatively, a light or lights may be positioned around the camera 62 or in any configuration that illuminates the furrow 202.

While two lights 64a, 64b are illustrated in Fig. 2, this disclosure contemplates using more, or fewer lights, if any at all. In one aspect of this disclosure, a plurality of lights may substantially surround the camera 62. In yet another implementation, only one light may be positioned next to the camera 62 to illuminate the furrow 202. In yet another implementation, the camera 62 may be configured to provide sufficient image data based on the expected ambient lighting conditions of a field and not require any additional lighting at all.

As illustrated in Fig. 2, the camera 62 may be a distance 204 from a ground plane 206. The ground plane 206 may generally represent the planar orientation of the surface of the unopened ground G surrounding the furrow 202. The distance 204 may be generally known based on the fixed positioning of the camera 62 to the planter row unit 14 and the planting depth of the planter row unit 14. In other words, the camera 62 may typically move in a horizontal plane 208 parallel to the ground plane 206 and adjustments to the planting depth of the planter row unit 14 may adjust the distance 204 of the camera 62 from the ground G.

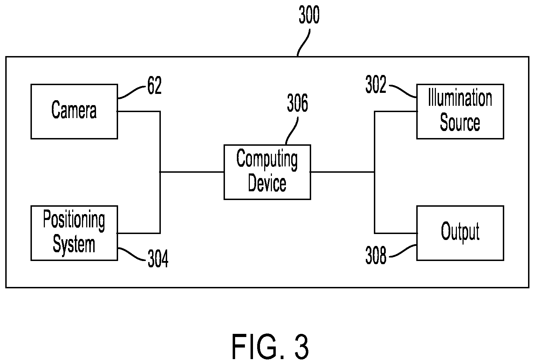

Referring to Fig. 3, a schematic representation of select components of an agricultural work machine 300 is illustrated. The agricultural work machine 300 may be coupled to, and include the planter row unit 14 to selectively move the planter row unit 14 along the underlying surface or ground G. The agricultural work machine 300 may include the camera 62 and an illumination source 302 such as lights 64a and 64b. Further, the agricultural work machine 300 may include a positioning system 304. The positioning system 304 may be a Global Positioning System ("GPS") capable of identifying the geographic location of the agricultural work machine 300. The positioning system 304 may include a vehicle speed sensor wherein the speed of the agricultural work machine 300 is specifically monitored. In one aspect of this disclosure, the speed of the agricultural work machine 300 is determined using the displacement of the geographic location via GPS. Regardless, the positioning system 304 may be used by the computing device 306 to determine the displacement of the camera 62 between image captures. For example, if the camera 62 is mounted to a tool bar of the work machine 300, the computing device 306 may utilize vehicle speed between image captures to determine camera 62 displacement between image captures. Similarly, the computing device 306 may record the geographic location of the camera 62 or the work machine 300 and determine the geographic distance displacement between the image captures.

The camera 62 and positioning system 304 may be communicatively coupled to the computing device 306. Further, the computing device 306 may be communicatively coupled to an output 308. The output 308 may be a visual display in a cab of the work machine 300, an audio device, or a haptic feedback device that may be selectively engaged by the computing device 306 to provide information about the agricultural work machine 300. In yet another implementation considered herein, the output 308 may be a remote device to be used by a remote user. In one aspect of this disclosure, the output 308 may provide access to a remote database such as a cloud-based system. The computing device 306 may be, or include, the controller discussed herein. Alternatively, the computing device 306 may be any control module or the like on the agricultural work machine 300. Accordingly, the computing device 306 contemplated herein may be any device capable of analyzing inputs and providing outputs as discussed herein.

In one aspect of this disclosure, a camera confidence logic 400 is applied to the captured image data for a given time interval to provide feedback containing a camera confidence. More specifically, in box 402 the computing device 306 may obtain image data from the camera for a given time interval. The given time interval may be any rolling time interval and in one example the time interval may be plus and minus 5 seconds for any given recorded image. More specifically, as mentioned herein, the camera 62 may continuously record image data during a planting operation. A time interval may be generated for any point in time during the planting operation wherein the image data for five seconds before and after the point in time is considered when evaluating camera confidence.

While a plus/minus five second time interval is specifically discussed herein, this disclosure contemplates using time intervals that are less than plus/minus five seconds and time intervals that are greater than plus/minus five seconds. Accordingly, the teachings of this disclosure could be applied to any time interval.

Regardless the length of the time interval, in box 404 all of the image data provided by the camera 62 may be processed by the computing device 306 or otherwise to identify the inadequate images therein. More specifically, the image data may include images that contain great amounts of dust that obstruct the camera view of the furrow. Similarly, the camera lens may become compromised and be unable to provide clear image data for the furrow. An image may be labelled inadequate by the computing device 306 whenever the image cannot be properly analyzed to provide the desired information. For example, the image data may be used to determine the depth of the furrow. In order to properly identify the depth of the furrow, the computing device may generate a point cloud wherein specific artifacts are identified in the image to determine the depth of the furrow. If the image data is not sufficiently clear to populate the point cloud with a sufficient number of artifacts to properly determine the furrow depth, that particular image may be labelled as inadequate in box 404. The computing device 306 may analyze all images from the time interval in box 404 to determine the number of inadequate images provided therein.

In box 406, the number of inadequate images provided for the time interval is determined by the computing device 306. A camera confidence value may be generated in box 408 based on the number of inadequate images identified in box 406. The camera confidence value may be based on the ratio of inadequate images compared to the total number of images provided for the time interval. In one example, the camera confidence can be provided as the percentage of images from the time interval that were properly analyzed by the computing device 306 to provide the corresponding information such as furrow depth.

In box 410, feedback regarding the camera confidence is provided. The provided feedback may be through a user interface wherein the user can see the camera confidence for a selected time. Further, the user interface may include a camera confidence indicator, for instance a bar having a height wherein the height corresponds to camera confidence. For example, as camera confidence goes down, the bar may become smaller or shorter. In other implementations, camera confidence may be shown with other types of icons, such as by numerical values or other image icons indicating camera confidence. Further still, in one contemplated implementation the bar may change form if the camera confidence drops below a threshold. For example, if the camera confidence drops below the threshold, the bar may change in appearance, for instance from a solid bar to one having hash marks. Other icons having other patterns or other colors may be used. Alternatively, the color of the bar may change as the camera confidence drops below the threshold. Alternatively, the feedback provided to the user may be in any perceivable form. For example, an audio, visual, or haptic alert may be provided when camera confidence drops below a threshold. Icons having a change in appearance to indicate threshold levels may also be considered.

In one aspect of this disclosure, the camera confidence can be generated in real time based on historical image data. In this implementation, the time interval from box 402 is based on historical data. For example, the time interval may be the prior ten seconds of image data. In this example, the camera confidence may be representative of the current camera confidence during a planting operation.

In one implementation contemplated herein, the feedback providing camera confidence from box 410 may be communicated to another system of the work machine or otherwise considered by the computing device 306 to generate appropriate responses from automated systems. For example, if the work machine has a downforce automation system reliant on the furrow depth from the image data, the furrow depth generated from the image data may not be considered when the data has a camera confidence below a preset threshold. Alternatively, the downforce automation system may rely on image data provided to the downforce automation system that has a camera confidence above the preset threshold. In other words, automated system may selectively use camera data only when it has a camera confidence above a threshold. Similar automation responses are contemplated herein for row cleaner automated systems and depth control automated systems among others.

In one aspect of this disclosure, the provided feedback may include directions to alleviate poor camera confidence. For example, the provided feedback may provide instructions to use adjacent row sensors for the requested data, recommend cleaning the camera, recommend reducing speed to reduce dust, recommend changing row cleaner settings, recommend changing downforce settings, recommend changing shield height setting for sunlight intrusion, and/or recommend changing machine direction to reduce sunlight intrusion among other things.

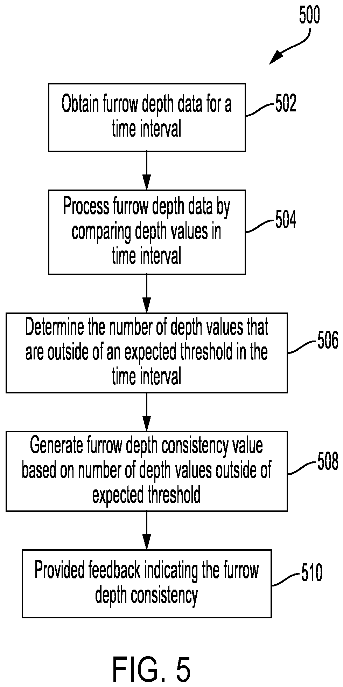

Similarly referring to Fig. 5, a furrow depth consistency logic 500 is illustrated. When the furrow depth readings are consistent and are measured within a narrow band, the average of these readings can appropriately be used to represent the furrow depth as a whole. However, when the furrow depth readings are inconsistent and measure within a large band, or cannot be measured, the average of available readings may not represent the furrow depth as a whole. Accordingly, furrow consistency is an additional metric that can be considered to understand furrow performance, availability of depth readings, and support decision making around confirming seed placement among other things.

The furrow depth consistency logic 500 may initially consider all of the furrow depth values generated in a time interval in box 502. The time interval may be any time interval before and/or after the target time. In one example, the time interval for the furrow depth consistency logic may be substantially similar to the time interval for the and similar to that described herein for the camera confidence logic 400. The furrow depth data may be collected using any known furrow depth determination. In one example, the image data provided by the camera 62 may be processed by the computing device 306 to identify the furrow depth based on the image data. However, other methods of determining furrow depth are contemplated herein to provide the furrow depth data.

In box 504, the furrow depth data is processed and the depth values provided across a time interval are compared. In box 506, the computing device 306 or other similarly capable component may determine the number of depth values within the time interval that are outside of an expected threshold. Values considered to be outside the expected threshold are considered as outliers. For example, furrow depth values may be compared to previous and/or subsequent furrow depth values to identify if the furrow depth value is within a threshold range. In one example, the threshold range may be within .25 inches of the previous and/or subsequent furrow depth value. In box 508, the computing device may generate a furrow depth consistency value based on the number of depth values outside of the expected threshold for the time interval. For example, if the furrow depth value of any given data point is not within the threshold range of the furrow depths identified for the time interval, the computing device may flag that data point for consideration regarding furrow depth consistency.

The furrow depth consistency may be generated based on the number of flagged data points for the time interval. In one non-exclusive example, the furrow depth consistency may be the percentage of furrow depth values that were within the expected threshold range for the time interval. Regardless, the furrow depth consistency may be provided in box 510. The furrow depth consistency may be provided to a user through a user interface similar to the camera confidence discussed herein. More specifically, a user interface may illustrate the measure furrow depth along with showing a furrow depth consistency bar thereunder. If the furrow depth consistency goes down, the bar may become shorter, may include hash marks, other patterns, or changes in color. Further, the provided feedback may be directed towards other automated systems of the work machine as described herein for the camera confidence.

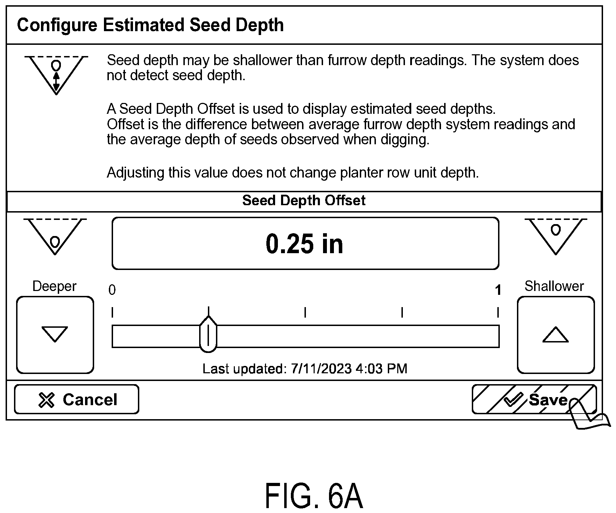

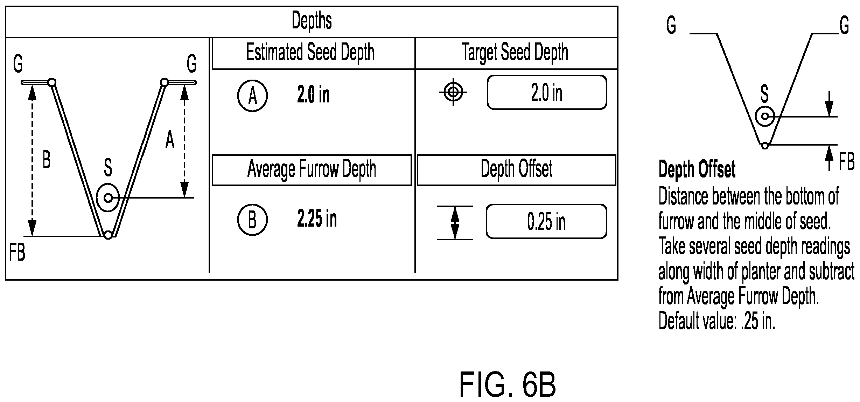

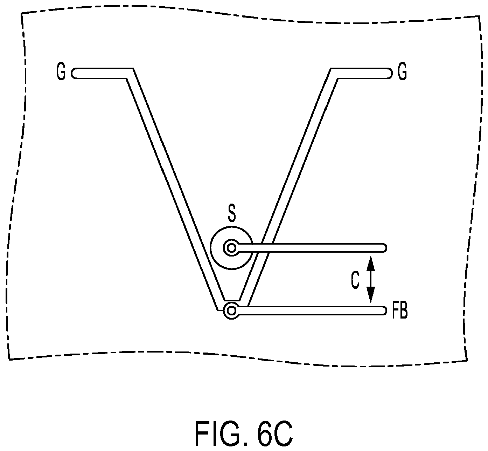

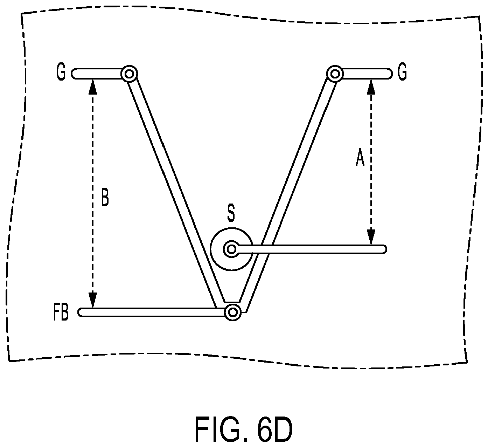

Referring now to FIGS. 6-11b, examples of output 308 are shown. For these examples, it is contemplated that a visual display is provided within operator station (i.e., cab) of an agricultural machine. Alternatively, the output 308 may be a remote device with a visual display to be used by a user. The remote device may include but is not limited to a personal device (e.g., cellphone, tablet, AR/VR headset and the like) accessible by a user at one or more locations, e.g., at the user's home, office, or even within the operator station of the agricultural machine.

Typically, during the planting operation, the user makes a choice about what depth to plant the seed or commodity S at each of the one or more planter row units 14. In one example, the present disclosure provides for apparatuses, methods and systems to calibrate, configure, measure and control of planting depth within furrow 202 to happen inside the operator station cab using a visual display. The visual display communicating information on the furrow profile, planting depth targets and controlled depths and further allowing for calibration, configuration and adjustment thereof.

In one implementation, planting depth data is processed and the planting depth values provided across a time interval are compared. The computing device 306 or other similarly capable component may determine the number of planting depth values within the time interval that are outside of an expected threshold. Planting depth values considered to be outside the expected threshold are consider as outliers. For example, planting depth values may be compared to previous and/or subsequent planting depth values to identify if the planting depth value is within a threshold range.

More specifically, with respect to FIGs. 6a-6d, a method and system for configuring commodity depth offset is provided. Commodity depth offset generally represents estimated commodity depths where the offset is the difference between the average furrow depth system readings (for example through visualization system 60) and the average depth of a planted commodity/seed observed when manually checking depth. Commodity depth offset icons and user interfaces in FIGs. 6a-6d thus provide an important calibration step to provide user confidence in visualization system 60. In this example, adjusting the commodity depth offset via icon commodity depth offset icons in FIGs. 6a-6d does not necessarily change planter row unit depth - which is done via other conventional methods of depth control of a planter row unit 14.

Referring again to FIGs. 6a-6d, during the planting operation, the row unit openers 22 cut a furrow 202 in the ground G for commodity S placement. The furrow depth of the furrow or trench 202 is shown in FIG. 6b and Fig. 6d as represented by bi-directional arrow B extending between ground G and bottom FB. The furrow depth can be measured physically or by other means such as a laser and is typically deeper than the depth of the commodity S measured physically. In other words, when controlling the depth of the openers 22, the bottom FB of furrow 202 is deeper than the final position of the commodity S. In this example, visual displays are provided pertaining to the definition, entry, and adjustment of the difference between at least two of the bottom of the furrow FB, ground G and the measured position of the commodity S in the furrow. The commodity depth offset may vary due to seed size, speed of planting, gauge wheel down force, soil type, or other factors.

Referring again to FIGS. 6a-6d, the commodity depth offset icon communicates to the user that a difference in depths exists (furrow bottom FB and commodity S). Using this information, a user may configure a corresponding offset after measuring the commodity S depth relative to the surface G as shown FIG. 6b and 6d represented by bi-directional arrow A. In another example, as shown in FIG. 6c represented by bi-directional arrow C, a user may configure a corresponding offset after measuring the commodity S depth relative to the bottom FB of the furrow 202. The commodity depth offset allows the user to view planting depth during planting in terms of commodity depth, as calculated from measured or controlled furrow depths and adjust this value before, during or after the planting operation.

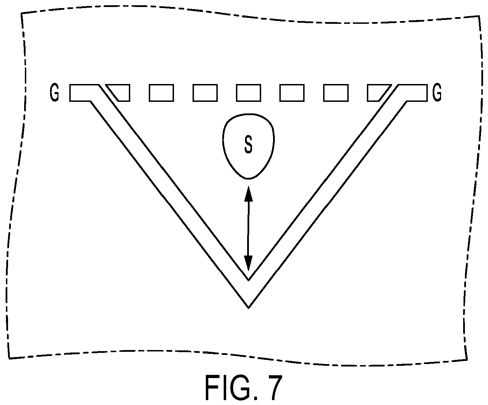

Referring to FIG. 7, a cutaway view from FIG. 6a of an exemplary representation of a planting depth icon is shown for commodity depth offset. The planting depth icon providing a clear indicator of configuration options of the visualization system 60, including in lists of systems within the display. For example, the bi-directional arrow represents multiple attributes such as shallower or deeper planting depth of the commodity S in furrow 202 with respect to the ground G and/or furrow bottom FB in furrow 202. In this manner, the planting depth icon of FIG. 7 is flexible in use to represent configured planting depths in the furrow 202.

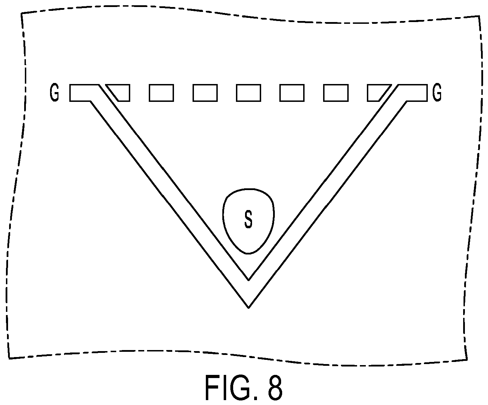

Referring to FIG. 8, a cutaway view from FIG. 6a of an exemplary representation of a planting depth icon is shown for commodity depth offset. Specifically, FIG. 8 shows representation of possible configurations to adjust planting depth such that the commodity S is planted deeper (i.e., further from the ground G and/or closer to furrow bottom FB). Due to the nature of depth being below ground G (or ground plane G in FIG. 2), an increase in value indicates a deeper planting depth of the commodity. Alternatively, the planting depth may also be measured from the bottom FB of the furrow or trench 202. This may be counterintuitive as compared to values above ground level (or ground plane G), so additional indication aids the usability of the system to show whether an increase or decrease in value corresponds to a deeper planting depth. The icon of FIG. 8 thus provides additional context and information to changes in system target or controlled depths.

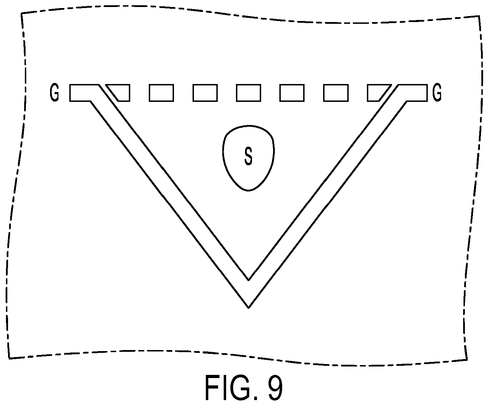

Referring to FIG. 9, a cutaway view from FIG. 6a of an exemplary representation of a planting depth icon is shown for commodity depth offset. Specifically, FIG.9 shows a representation of possible configurations to adjust planting depth such that the commodity S is planted shallower (i.e., closer to ground G and/or further from furrow bottom FB). Due to the nature of depth being below ground G (or ground plane G from FIG. 2), a decrease in value indicates a shallower planting depth of the commodity S. Alternatively, the planting depth may also be measured from the bottom FB of the furrow or trench 202. This may be counterintuitive as compared to values above ground level (or ground plane G), so additional indication aids the usability of the system to show whether an increase or decrease in value corresponds to a shallower planting depth. The icon of FIG. 9 thus provides additional context and information to changes in system target or controlled depths.

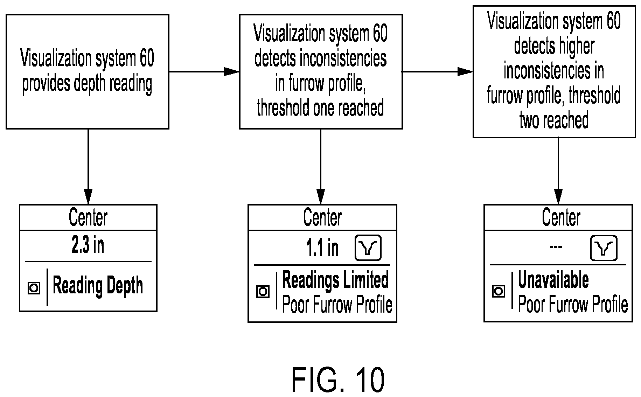

Referring now to FIGS. 10-12, the present disclosure provides for apparatuses, methods and systems to calibrate, configure, measure and control of furrow formation to happen inside the operator station cab using a visual display. The visual display communicating information on the furrow profile, allowing for calibration, configuration and adjustment thereof.

Referring now to FIG. 10, visualization system 60 may utilize a laser to read the furrow profile (e.g., depth and/or shape) of the furrow 202. During planting, a furrow shape may degrade due to improper down force, high speeds, soil type, or other reason. If the furrow shape is too inconsistent, the system is less confident in furrow depth readings. The furrow profile may further include, but is not limited to, a furrow shoulder, where a top portion of the furrow joins an adjacent surface of the soil, a furrow bottom generally located where sides of the furrow intersect or terminate at a bottom, and a shape of sidewalls of the furrow. The furrow profile may be determined by a number of factors including a geometry of the row unit, humidity, soil moisture, and soil texture including soil granularity.

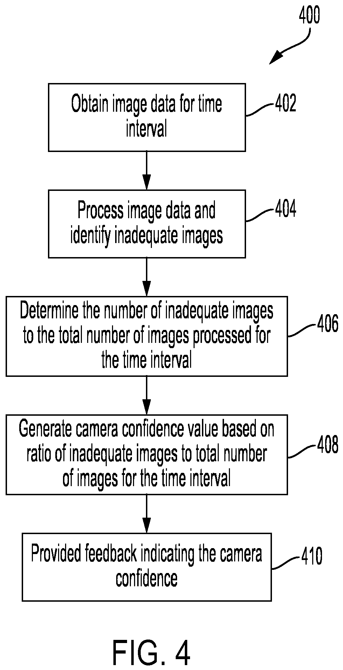

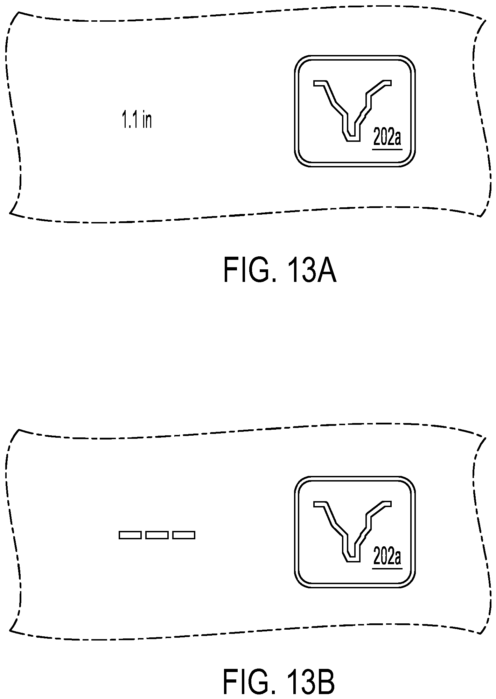

When the system is not confident in the furrow depth due to low furrow integrity, such as where the furrow profile is inconsistent within a row or from row to row, (as previously discussed and shown in FIGS. 4-5), the user may be notified on a visual display via a furrow profile icon 202a representing a poor furrow profile. (See FIG. 13) The poor furrow icon 202a may be shown at threshold one to alert the user to the degradation of the furrow shape consistency. The furrow profile icon 202a may be shown at threshold two when the visualization system 60 detects increased (as compared to threshold one) inconsistent furrow profile and/or depth reading is unavailable to the user, at which time the depth readout may show three dashed lines. The furrow profile icon 202a provides context to unavailable data, to help the user diagnose the current state of the system and the furrow environment. By additionally showing the furrow profile icon 202a before the depth reading is unavailable, the user is provided more advanced notice to monitor furrow environment, act, and have more appropriate expectations for future data states. While the furrow profile icon 202a, as illustrated, graphically shows a poor furrow by showing improperly formed sidewalls, other furrow profile icons are contemplated. For instance, the poor furrow icon may include a furrow alert without a graphic representation of the shape of the furrow. In other implementations, the shape of the furrow may indicate a location of an anomaly of the furrow, the shape may also generically indicate that the furrow may be improperly formed.

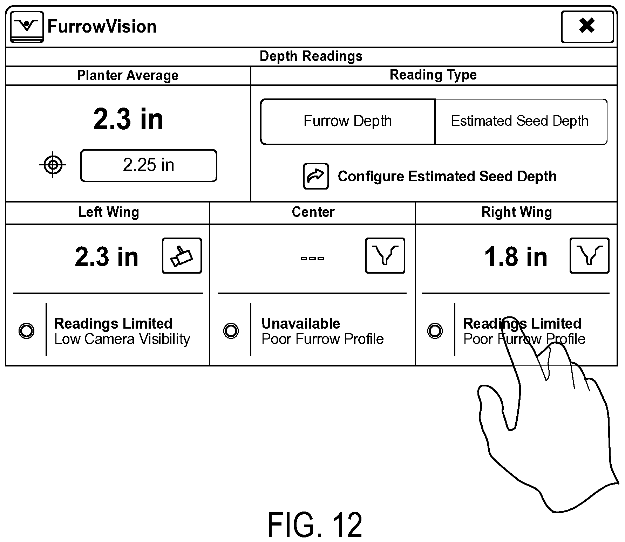

Referring now to FIGs. 12, an example of user interface from a visual display according to the logic flow of FIG. 10 is shown. Visual display communicating information on the furrow profile, allowing for calibration, configuration and adjustment thereof. FIGS. 13a-13b show cutaway views of the display screen or portion of FIG. 12, specifically showing information related to the furrow quality.

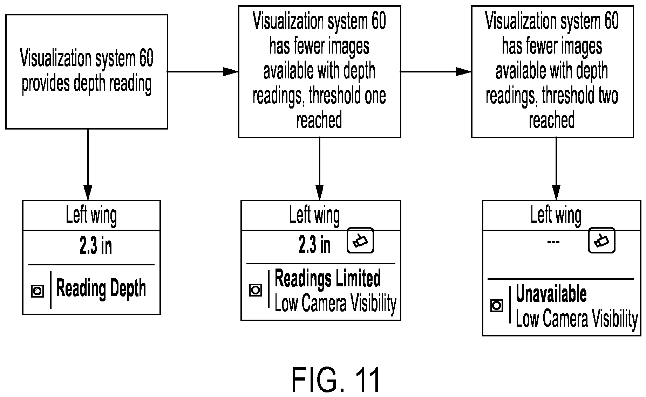

With respect to FIG. 11, visualization system 60 may utilize camera images from camera 62 to detect laser readings of depth and/or shape of the furrow 202. During planting, the camera images/data from camera 62 may be obscured due to dust, mud, or sunlight conditions, and/or the laser reading of depth may not be available. If a high enough percentage of images are unavailable (as previously discussed and shown in FIGS. 4-5), the operator may be notified via an icon represented by a camera icon 62a. In other implementations, other camera icons are contemplated and text or audio alerts are also considered. The furrow camera icon 202a may be shown at an initial threshold (see FIG. 11a) to alert the user to the degradation of the camera images/data, and at a second threshold (see FIG. 11b) when the depth reading is unavailable to the user, at which time the depth readout may show three dashed lines. The furrow camera icon provides context to unavailable data, to help the operator diagnose the current state of the system and the furrow environment. By additionally showing the furrow camera icon before the depth reading is unavailable, the operator is provided more advanced notice to monitor furrow environment, act, and have more appropriate expectations for future data states.

In one implementation, camera image data is processed and the camera image values provided across a time interval are compared. The computing device 306 or other similarly capable component may determine the number of camera image values within the time interval that are outside of an expected threshold. Camera image values considered to be outside the expected threshold are consider as outliers. For example, camera image values may be compared to previous and/or subsequent camera image values to identify if the camera image value is within a threshold range.

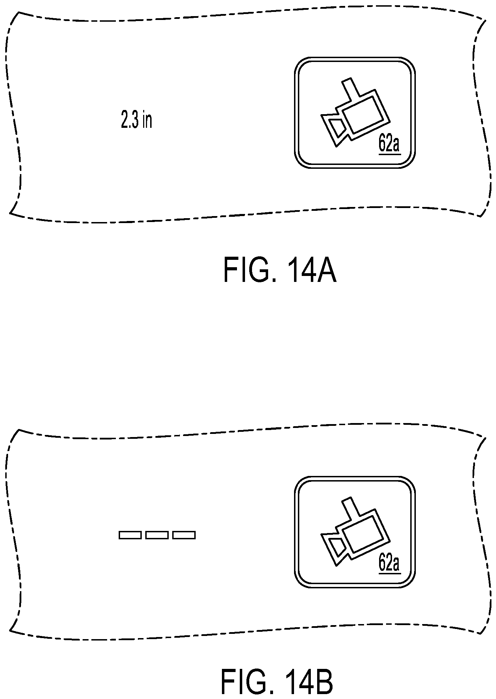

Referring again to FIGs. 12, an example of user interface from a visual display according to the logic flow of FIG. 10 is shown. Visual display communicating information on the furrow camera, allowing for calibration, configuration and adjustment thereof. FIGS. 14a-14b show cutaway views of the display screen or portion of FIG. 12, specifically showing information related to the camera.

While implementations incorporating the principles of the present disclosure have been described hereinabove, the present disclosure is not limited to the described implementations. Instead, this application is intended to cover any variations, uses, or adaptations of the disclosure using its general principles. Further, this application is intended to cover such departures from the present disclosure as come within known or customary practice in the art to which this disclosure pertains and which fall within the limits of the appended claims.

Those skilled in the art will recognize that it is common within the art to implement apparatuses and/or devices and/or processes and/or systems in the fashion(s) set forth herein, and thereafter use engineering and/or business practices to integrate such implemented apparatuses and/or devices and/or processes and/or systems into more comprehensive apparatuses and/or devices and/or processes and/or systems. That is, at least a portion of the apparatuses and/or devices and/or processes and/or systems described herein can be integrated into comprehensive apparatuses and/or devices and/or processes and/or systems via a reasonable amount of experimentation.

Although the present disclosure has been described in terms of specific examples and applications, persons skilled in the art can, considering this teaching, generate additional examples without exceeding the scope or departing from the spirit of the present disclosure described herein. Accordingly, it is to be understood that the drawings and description in this disclosure are proffered to facilitate comprehension of the present disclosure and should not be construed to limit the scope thereof.

As used herein, unless otherwise limited or modified, lists with elements that are separated by conjunctive terms (e.g., "and") and that are also preceded by the phrase "one or more of' or "at least one of" indicate configurations or arrangements that potentially include individual elements of the list, or any combination thereof. For example, "at least one of A, B, and C" or "one or more of A, B, and C" indicates the possibilities of only A, only B, only C, or any combination of two or more of A, B, and C (e.g., A and B; B and C; A and C; or A, B, and C).

It should also be noted that the different examples described herein can be combined in different ways. That is, parts of one or more examples can be combined with parts of one or more other examples. All of this is contemplated herein.

Embodiments of the invention can be described with reference to the following numbered clauses, with preferred features laid out in dependent clauses:
1. A method for evaluating a furrow formed by an agricultural machine, comprising:
   obtaining image data of the furrow from a camera on the agricultural machine;
   determining from the image data an average planting depth within the furrow; and
   adjusting, on a user interface, a planting depth offset based on the average planting depth.
2. The method of clause 1, wherein the image data comprise images that cannot be evaluated to determine at least one of the furrow depth, the average planting depth, a furrow profile and a camera quality.
3. The method of clause 1, wherein the planting depth offset is displayed visually on a user interface.
4. The method of clause 3, wherein the user interface displays a slider configured to change the planting depth offset.
5. The method of clause 3, wherein the user interface provides adjustments for a shallower planting depth and a deeper planting depth, the shallower and deeper planting depth corresponding to the planting depth offset.
6. The method of clause 5, wherein a decrease in value of the planting corresponds to a shallower planting depth and in an increase in value of the planting depth corresponds to a deeper planting depth.
7. The method of clause 1, wherein the feedback is considered by an automated system.
8. The method of clause 7, wherein the automated system is a downforce automation system.
9. The method of clause 8, wherein the automated system is a row cleaner automation system.
10. The method of clause 7, wherein the automated system is a depth control automation system.
11. A method for evaluating quality of provided values for an agricultural machine, comprising:
   obtaining a plurality of planting depth values for a time interval;
   processing the plurality of planting depth values by comparing each of the plurality of planting depth values to one or more of the other plurality of planting depth values;
   identifying a number of outliers in the plurality of planting depth values for the time interval;
   generating a value confidence for the time interval by comparing the number of outliers with the total number of the plurality of planting depth values for the time interval;
   providing feedback indicating the value confidence.
12. The method of clause 11, wherein each of the plurality of planting depth values comprise at least one of an average planting depth or a planting depth offset.
13. The method of clause 12, wherein the average planting depth is determined from image data provided by a camera.
14. The method of clause 11, wherein the feedback is displayed visually on a user interface.
15. The method of clause 14, wherein the user interface displays a bar configured to change in appearance to correspond with the value confidence.
16. The method of clause 14, further comprising displaying, on the user interface, an icon or indicator to correspond with conditions of low camera confidence, low furrow integrity, cleanliness, dust, or other environmental condition.
17. The method of clause 11, wherein the feedback is considered by an automated system.
18. The method of clause 17, wherein the automated system is a downforce automation system.
19. The method of clause 17, wherein the automated system is a row cleaner automation system.
20. The method of clause 17, wherein the automated system is a depth control automation system.

## Claims

1. A method for evaluating a furrow formed by an agricultural machine, comprising:
obtaining image data of the furrow from a camera on the agricultural machine;
determining from the image data an average planting depth within the furrow; and
adjusting, on a user interface, a planting depth offset based on the average planting depth.

2. The method of claim 1, wherein the image data comprise images that cannot be evaluated to determine at least one of the furrow depth, the average planting depth, a furrow profile and a camera quality.

3. The method of claim 1 or claim 2, wherein the planting depth offset is displayed visually on a user interface.

4. The method of claim 3, wherein the user interface displays a slider configured to change the planting depth offset.

5. The method of claim 3, wherein the user interface provides adjustments for a shallower planting depth and a deeper planting depth, the shallower and deeper planting depth corresponding to the planting depth offset.

6. The method of claim 5, wherein a decrease in value of the planting corresponds to a shallower planting depth and in an increase in value of the planting depth corresponds to a deeper planting depth.

7. The method of any one of the preceding claims, wherein the feedback is considered by an automated system.

8. The method of claim 7, wherein the automated system is a downforce automation system.

9. The method of claim 7, wherein the automated system is a row cleaner automation system.

10. The method of claim 7, wherein the automated system is a depth control automation system.

11. A method for evaluating quality of provided values for an agricultural machine, comprising:
obtaining a plurality of planting depth values for a time interval;
processing the plurality of planting depth values by comparing each of the plurality of planting depth values to one or more of the other plurality of planting depth values;
identifying a number of outliers in the plurality of planting depth values for the time interval;
generating a value confidence for the time interval by comparing the number of outliers with the total number of the plurality of planting depth values for the time interval;
providing feedback indicating the value confidence.

12. The method of claim 11, wherein each of the plurality of planting depth values comprise at least one of an average planting depth or a planting depth offset.

13. The method of claim 12, wherein the average planting depth is determined from image data provided by a camera.

14. The method of any one of claims 11 to 13, wherein the feedback is displayed visually on a user interface.

15. The method of claim 14, wherein the user interface displays one or more of: 1) a bar configured to change in appearance to correspond with the value confidence; 2) an icon or indicator to correspond with conditions of low camera confidence; 3) low furrow integrity; 4) cleanliness; 5) dust; or 6) other environmental condition.
